# EUROPEAN PATENT APPLICATION

(11) **EP 1 107 592 A2**
(43) Date of publication of application: **13.06.2001**
(21) Application number: 00126797.0
(22) Date of filing: 06.12.2000
(51) Int. Cl.: H04N 7/16

(54) **Programmable selective broadcasting reception system, broadcasting apparatus and reception apparatus**

(30) Priority: 08.12.1999 JP 34956499
(71) Applicant: NEC CORPORATION, Tokyo (JP)
(72) Inventor: Shimazu, Hideo, Minato-ku, Tokyo (JP)
(74) Representative: Betten & Resch

(57) **Abstract**

In a programmable selective broadcasting reception system, a broadcasting station includes a unit for broadcasting a broadcasting contents program formed from broadcasting contents, a contents attribute, and an execution program. A reception apparatus includes a reception unit, user attribute storage unit, current time acquisition unit, current place acquisition unit, attribute input unit, execution program storage unit, contents attribute storage unit, broadcasting contents, playback unit, and execution program engine. The current time acquisition unit detects and writes current time. The current place acquisition unit detects and writes the current place of the user. The execution program storage unit, contents attribute storage unit, and broadcasting contents storage unit respectively read out and store the contents of the execution program, contents attribute, and broadcasting contents. The execution program engine refers to the attribute values of the contents attribute storage unit and the user attribute storage unit to interpret and execute the execution program, and when the broadcasting contents are determined to be broadcast, transmits the broadcasting contents to the playback unit. A programmable selective broadcasting apparatus and reception apparatus are also disclosed.

## Description

### Background of the Invention

The present invention relates to a digital broadcasting information selection apparatus and method and, more particularly, to a broadcasting reception system, broadcasting apparatus, and reception apparatus capable of dynamically or properly changing permission/inhibition of broadcasting of transmitted broadcasting contents in accordance with a viewer's temporal situation, spatial situation, taste, and the like.

Digital broadcasting is becoming popular in many countries including Japan and U.S.A. Digital broadcasting can broadcast not only broadcasting contents but also data broadcasting of broadcasting data processable by a computer.

If data broadcasting is enabled, attribute information of broadcasting contents is attached to allow the receiving side to determine from the attribute information whether a program matches a viewer's favorite and to filter the broadcasting contents. At present, various proposals have been made for this method (see, e.g., Tadashi Nishi & Atsuko Nomura, "Digital Broadcasting", (CHUOKEIZAI-SHA), and Dentsu Institute for Human Studies, "Future Map of ITS Business", (SANKAIDO Publishing).

A conventional broadcasting content selective broadcasting function adds attribute data to broadcasting contents. The algorithm of the filter on the receiving side is fixed. Attribute data can be relatively easily added to broadcasting contents. It is, however, impossible to introduce different selection standards for broadcasting contents.

Considering the future development of broadcasting contents such as CMs (Commercial Messages) which will be proposed by the present invention, what is effective is not to broadcast the same CM to the general public but to broadcast a CM which matches the taste and needs of an individual (customer). This depends on criteria for differentiation. To realize this, permission/inhibition of broadcasting of broadcasting contents must be determined based on different standards.

Determination of permission/inhibition of broadcasting using different standards dynamically changes depending on the situation on the receiving side.

For example, when a CM of merchandise against snow damage is to be broadcast, the CM is effectively selectively received by only receivers in a snow district because broadcasting the CM in a southern district is meaningless. The CM is efficiently broadcast not on a fine day but on a heavy snow day. If a receiver has a mechanism of acquiring weather information on a given day at a given place, the receiver and mechanism are combined to enable broadcasting the CM on only a heavy snow day.

In a federal union where state governments are powerful, the contents of permitted advertisements may change depending on the state. For example, a given state inhibits advertisements of alcohol, and another state inhibits advertisements of guns. In the state which inhibits advertisements of alcohol, no advertisements of alcohol can be broadcast. Thus, advertisements of alcohol must be segmented in accordance with districts to determine permission/inhibition of broadcasting.

As one method, different channels are prepared for respective states. However, an area at the boundary between states undesirably receives the radio waves of the two states. To prevent this, a receiver comprises a GPS (Global Positioning System), and checks which of states the receiver belongs to on the basis of accurate positional information of the receiver, thereby determining permission/inhibition of broadcasting.

Conventional broadcasting contents are indiscriminately broadcast to all the viewers as far as the viewers tune in to a channel. If adaptation of broadcasting contents to each individual viewer advances, the determination criterion of permission/inhibition of broadcasting of broadcasting contents changes for each receiver.

This difference can be exemplified by the WWW (World Wide Web) of the Internet. An initial WWW (up to 1994) was implemented by a static HTML language and a WWW browser for executing the HTML language. The static HTML (HyperText Markup Language) language is like a file of a word processor. When the static HTML language is downloaded by the WWW browser, an image like a file created by a word processor appears on the screen. This image cannot be edited unlike a file of the word processor. When certain WWW contents are laid open to the public, the user inputs the URL (Uniform Resource Locater) to only display the same HTML contents on the WWW browser of any user.

After that, the JAVA applet, and script languages such as JAVASCRIPT and VBSCRIPT are introduced, which are programs executed on the WWW browser side. The HTML contents creator packages HTML contents with a program such as the JAVA applet or script language, and transmits them. The WWW browser side executes the packaged program to realize different operations depending on the user of the WWW browser.

As a similar idea, there is a concept of an active network in the field of network protocols (reference: Kohana & Sugiyama, "Active Network: Use Custom-Made Network", Information Processing, 1999/6, Vol. 40, No. 6, Information Processing Society of Japan).

The network protocol in the Internet field is TCP/IP, but implementing all packets by the same protocol is sometimes wasteful. For this reason, packets have at least a protocol necessary for network conversation as a common language, but an additional part is packaged and transmitted with a program for interpreting the protocol of the additional part. The packet-receiving side executes the packaged program in order to interpret the protocol of the additional part.

### Summary of the Invention

It is the first object of the present invention to provide a concrete programmable selective broadcasting reception system, broadcasting apparatus, and reception apparatus and method for realizing in the broadcasting contents of digital broadcasting the concept of the JAVA applet and script language adopted in WWW contents, and flexibly coping with the needs of the viewer.

It is the second object of the present invention to provide a programmable selective broadcasting reception system, broadcasting apparatus, and reception apparatus which allow the broadcasting side together with transmitted broadcasting contents, to designate a situation in which the broadcasting side wants the recipient to watch the broadcasting contents, or to dynamically change permission/inhibition of broadcasting of broadcasting contents in accordance with the situation of the receiving side.

It is the third object of the present invention to provide a programmable selective broadcasting system, broadcasting apparatus, and broadcasting reception apparatus and method capable of attaching only the ID (Identification Data) of an execution program to be executed to broadcasting contents, thereby realizing a small broadcasting capacity and easy management.

It is the fourth aspect of the present invention to provide a programmable selective broadcasting reception system, broadcasting apparatus, and reception apparatus capable of downloading execution programs at once to the receiving side using broadcasting, thereby easily realizing loading of an execution program on the receiving side.

To achieve the above objects, according to the present invention, there is provided a programmable selective broadcasting reception system in which broadcasting contents broadcast at once from a broadcasting station to many unspecified people in a wide range are received by a reception apparatus, the broadcasting station comprising means for broadcasting a broadcasting contents program formed from broadcasting contents serving as data of contents to be broadcast, a contents attribute having a pair of an attribute and an attribute value of the broadcasting contents, and an execution program which describes a processing algorithm for determining whether to play back the broadcasting contents in the reception apparatus, and the reception apparatus comprising a reception unit for receiving the broadcasting contents program, a user attribute storage unit for storing a pair of an attribute and an attribute value of a user, a current time acquisition unit for detecting current time and writing the current time at a time attribute value storage location of the user attribute storage unit at a predetermined time interval, a current place acquisition unit for detecting a current place of the user and writing the current place at a place attribute value storage location of the user attribute storage unit at a predetermined time interval, an attribute input unit for inputting the attribute and the attribute value of the user attribute storage unit, an execution program storage unit, contents attribute storage unit, and broadcasting contents storage unit for respectively reading out and storing contents of the execution program, the contents attribute, and the broadcasting contents from the broadcasting contents program received by the radio reception unit, a playback unit for playing back the broadcasting contents, and an execution program engine for referring to the attribute value of the contents attribute storage unit and the attribute value of the user attribute storage unit to interpret and execute the execution program stored in the execution program storage unit, and when the broadcasting contents are determined to be broadcast, transmitting the broadcasting contents stored in the broadcasting contents storage unit to the playback unit.

### Brief Description of the Drawings

Fig. 1 is a view showing a whole arrangement of a broadcasting system to which the present invention can be applied;
Fig. 2 is a block diagram showing the first embodiment of the present invention;
Fig. 3A is a view showing a broadcasting contents program example;
Fig. 3B is a view showing a simple broadcasting contents program;
Fig. 3C is a view showing an execution program transmission broadcasting program;
Fig. 4 is a flow chart showing an example of an execution program according to the present invention;
Fig. 5 is a block diagram showing the second embodiment of the present invention; and
Fig. 6 is a block diagram showing the third embodiment of the present invention.

### Description of the Preferred Embodiments

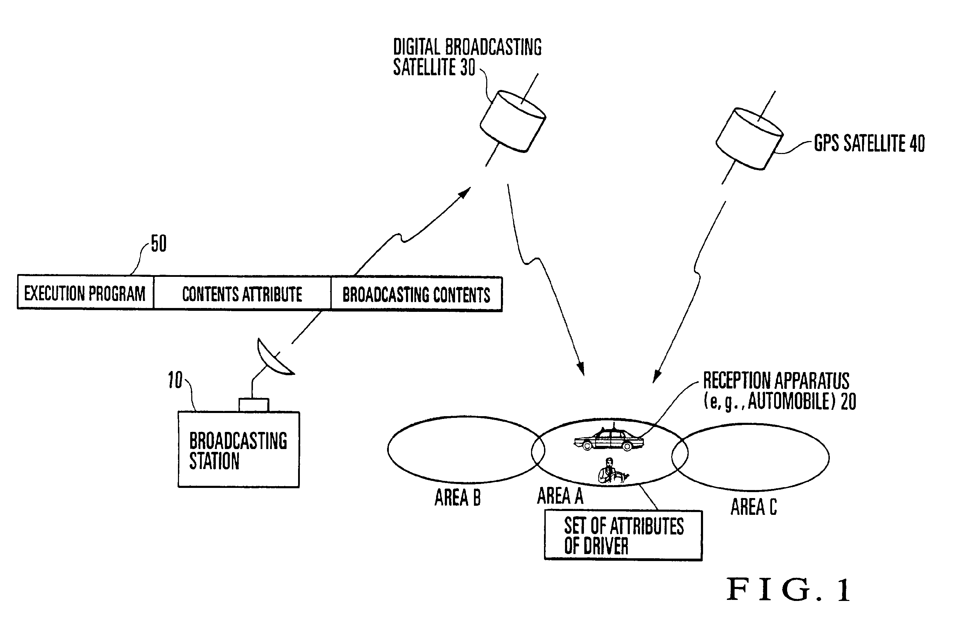

As shown in Fig. 1, a broadcasting reception system according to the present invention mainly comprises a broadcasting station 10, a reception apparatus or mobile terminal apparatus mounted on, e.g., an automobile, a digital broadcasting satellite 30, and a GPS satellite 40.

In Fig. 1, the broadcasting station 10 creates a broadcasting contents program 50, and transmits it to a reception apparatus 20 via the digital broadcasting satellite 30.

The broadcasting contents program 50 is made up of broadcasting contents, a contents attribute, and an execution program. For example, for a CM, the broadcasting contents are CM contents. The contents attribute is information which can be selectively received by only a receiver in a snow district (e.g., area A among areas A to C) when a CM of merchandise against snow damage is to be broadcast, or information which is segmented for each state to determine permission/inhibition of broadcasting in a state which inhibits CMs of alcohol, guns, and the like. The execution program is an interpretive program packaged in data such as broadcasting contents. The present invention is characterized in that the interpretive program is packaged in data such as broadcasting contents, unlike the JAVA applet (packaged in an HTML file) and an active network (packaged in a network protocol).

The reception apparatus 20 comprises a GPS 20A. The reception apparatus 20 receives positional information from the GPS satellite 40, determines the state (areas A to C) to which the reception apparatus belongs, compares the determination result with the attribute (e.g., positional information) of broadcasting contents transmitted by the broadcasting station 10, and determines permission/inhibition of broadcasting in accordance with an execution program. If broadcasting is permitted, the broadcasting contents are played back to display images with sound. If broadcasting is inhibited, no broadcasting contents are played back, and no images are displayed with sound.

The reception apparatus 20 may be a TV receiver capable of receiving the above broadcasting contents program 50 and processing it.

Detailed examples of the broadcasting system, apparatus, and method according to the present invention will be described by way of the first to third embodiments.

### (First Embodiment)

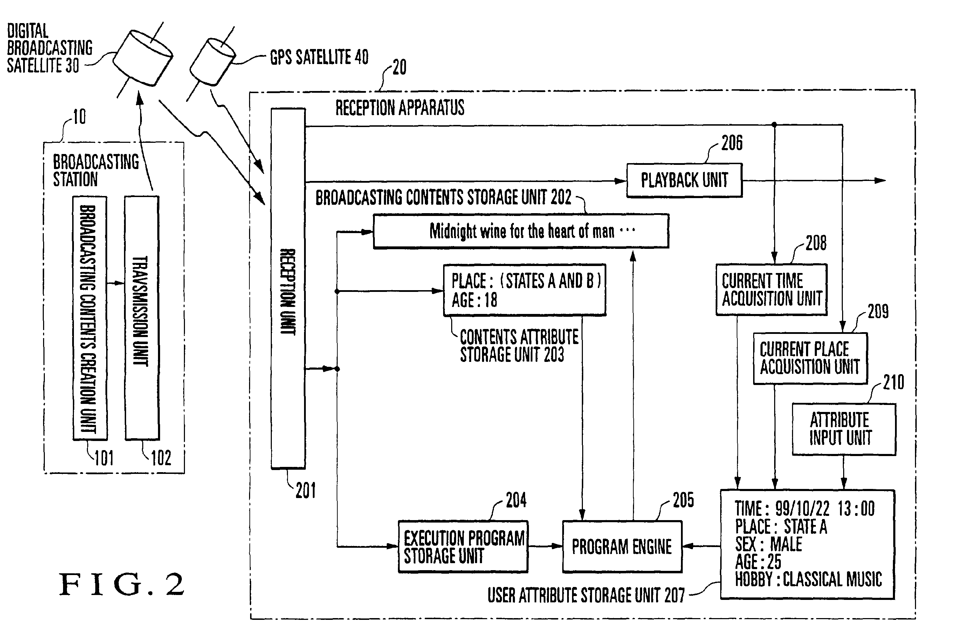

In Fig. 2 showing the first embodiment of the present invention, a broadcasting station 10 contains a broadcasting contents creation unit 101 and transmission unit 102.

A reception apparatus 20 includes a reception unit 201, broadcasting contents storage unit 202, contents attribute storage unit 203, execution program storage unit 204, program engine 205, playback unit 206, user attribute storage unit 207, current time acquisition unit 208, current place acquisition unit 209, and attribute input unit 210.

The operation of the first embodiment will be explained.

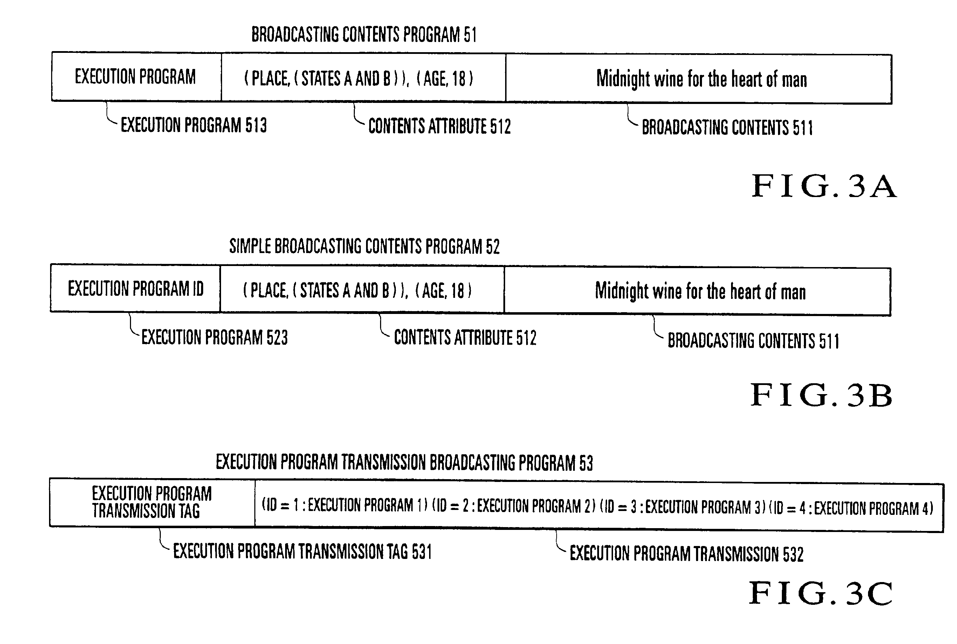

The broadcasting contents program creation unit 101 of the broadcasting station 10 creates digital data of a broadcasting contents program 51 made up of broadcasting contents 511, a contents attribute 512, and an execution program 513, as shown in Fig. 3A. The broadcasting contents 511 are the contents of broadcasting (e.g., "Midnight wine for the heart of man,..."). The contents attribute 512 is comprised of a pair of the attribute (e.g., place and age) and attribute values (states A and B, age 18) of the broadcasting contents 511. The execution program 513 is a computer program for determining permission/inhibition of broadcasting of the broadcasting contents. The execution contents program 51 created in this way is transmitted to the transmission unit 102 directly or after being temporarily stored. The broadcasting contents program 51 is subjected to processing such as modulation, and transmitted to a digital broadcasting satellite 30.

Note that the broadcasting station 10 suffices to be broadcasting equipment capable of digital broadcasting. When the broadcasting side wants the viewer to view broadcasting contents without any limitations, or the viewer wants to view broadcasting contents without any limitations, only the broadcasting contents 511 may be transmitted from the broadcasting station 10 without transmitting the contents attribute 512 and execution program 513. The broadcasting contents 511 are expressed by a character string ("Midnight wine...") in Fig. 2, but are not limited to them. Any kind of data expression such as images or sound selected by the broadcasting contents creator can be transmitted. For example, a video or music file may be transmitted.

The reception unit 201 of the reception apparatus 20 receives via the digital broadcasting satellite 30 the broadcasting contents program 51 transmitted by the broadcasting station 10, and performs processing such as demodulation.

The contents of the broadcasting contents 511, contents attribute 512, and execution program 513 of the broadcasting contents program 51 demodulated by the reception unit 201 are respectively stored in the broadcasting contents storage unit 202, contents attribute storage unit 203, and execution program storage unit 204.

The user attribute storage unit 207 stores the attribute and attribute value of the recipient. For example, the time, place, sex, age, and hobby are stored as attributes, and 10/22/'99 13:00, state A, male, 25 years old, and classical music are stored as attribute values, as shown in the block of the storage unit 207 in Fig. 2.

The time acquisition unit 208 and place acquisition unit 209 receive, by the GPS of the reception unit 201, pieces of current time and place information transmitted by the GPS satellite 40, and write the time and place attribute values of the user attribute storage unit 207 periodically (e.g., every minute). The GPS is mounted on a general car navigation product, and can measure the latitude and longitude of the current position at a precision of several meters. As the current time, the time of the internal clock of the reception apparatus may be used. When the reception apparatus is used in only the same area (e.g., area A in Fig. 1), or when the reception apparatus is fixedly used, the GPS and current place acquisition unit can be eliminated.

The user can input and change attributes and attribute values other than the attributes and attribute values of the time and place stored in the user attribute storage unit 207, as needed, or can add other attributes and attribute values. Note that the attributes and attribute values of the time and place may be manually changed.

The attributes and attribute values of the user attribute storage unit 207 may be listed as a table in accordance with a plurality of items, and proper attributes and attribute values may be selected and set through the attribute input unit 210 from a plurality of attributes and attribute values in the table.

The execution program engine 205 interprets and executes the execution program 513 stored in the execution program storage unit 204. For example, when the program 513 is a JAVA program, the execution program engine 205 is a JAVA program engine (generally called JAVA VIRTUAL MACHINE). The execution program of the execution program storage unit 204 has a processing structure for determining whether to necessarily transfer broadcasting contents in the broadcasting contents storage unit 202 to the playback unit 206 or to discard the broadcasting contents.

The execution program 513 can describe read of the attribute values of the contents attribute storage unit 203 and read of the attribute values of the user attribute storage unit 207. However, the execution program 513 does not permit write of these attribute values.

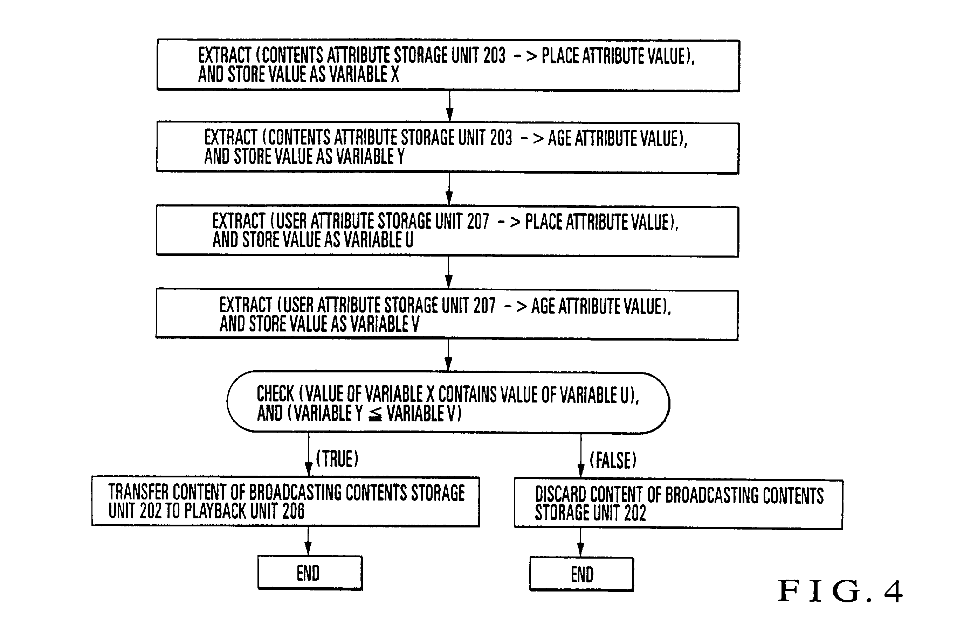

Fig. 4 shows an example of the execution program 513. This execution program 513 describes processing in which, when the place attribute value (X; states A and B) of the contents attribute storage unit 203 contains the place attribute value (U) of the user attribute storage unit 207, and the age attribute value (Y) of the contents attribute storage unit 203 is equal to or less than the age attribute value (V) of the user attribute storage unit 207, the program engine 205 transfers the value of the broadcasting contents storage unit 202 to the playback unit 206; otherwise, discards the value.

Fig. 2 shows an example of the attribute values. Since the user is in state A (= U) at present, and is 25 years old (= V), i.e., over 18 years old, an alcohol CM "Midnight wine for the heart of man,..." is played back by the playback unit 206.

When the playback unit 206 receives the broadcasting contents 511, the playback unit 206 plays back them in a format corresponding to the format of the broadcasting contents, and displays a playback image with sound on a display (not shown). When the reception unit 201 of the reception apparatus 20 in Fig. 2 receives only broadcasting contents 511 to which no execution program 513 nor contents attribute 512 in Fig. 3A is added, the broadcasting contents 511 are directly transferred to the playback unit 206 which plays back and displays an image.

The contents attribute 512 in Fig. 3A is made up of a pair of an attribute name and its attribute value in Fig. 2. For the type of attribute, a set of attribute names is defined in advance, and the reception apparatus 20 is notified of the presence of the set of attribute names.

As another method, the broadcasting station 10 may set an arbitrary attribute name and attribute value without notifying the reception apparatus of any attribute name in advance, and the reception apparatus 20 may cause the user to freely set an attribute and attribute value. In this case, if similar but different attribute names are used for the same attribute, the attribute names on the broadcasting station 10 and reception apparatus 20 may not coincide with each other.

For example, the broadcasting station 10 uses an attribute name "position", whereas the reception apparatus 20 uses an attribute name "place". The two attribute names do not coincide with each other. Even if the broadcasting station 10 attaches information "the broadcasting contents are optimal for people for position = Atami." to broadcasting contents, and the reception apparatus 20 has a definition "this viewer wants to select and view only broadcasting contents for place = Atami.", the viewer cannot view the broadcasting contents. However, the greatest merit of this rough method is high operability that the broadcasting station and reception apparatus need not specify any definition of the attribute name in advance. Considering that broadcasting contents are not few important resources but are invaluable for each of contents that are broadcast for 24 h on 365 days in more than 100 channels, the method free from any limitations on operation is practical even if several % of related broadcasting contents fail to acquire.

In Fig. 2 of the present invention, the attribute and attribute value are described on the assumption that sets of attribute names in the broadcasting station 10 and reception apparatus 20 coincide with each other. However, there are other effective methods, and the present invention does not exclude them.

### (Second Embodiment)

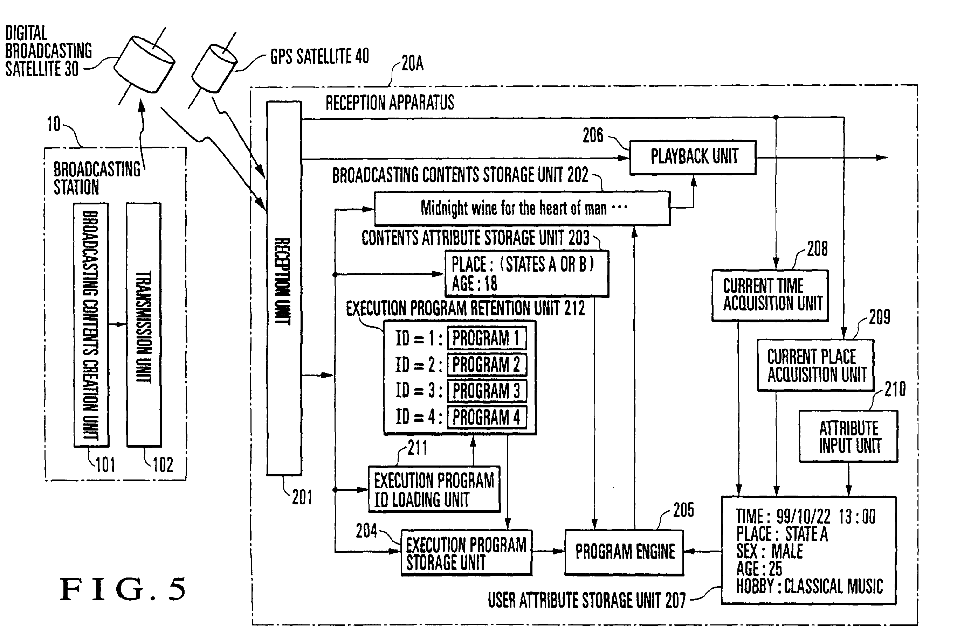

Fig. 5 shows the second embodiment of a broadcasting reception system according to the present invention.

The JAVA applet of WWW contents can be kept used for several weeks or months without any change after the JAVA applet is once created. However, broadcasting contents are 30 sec long at most for a CM, so packaging each CM with an interpretive program increases the broadcasting capacity and puts a burden on operation. The second embodiment solves this problem.

Differences in the arrangement and the like between Fig. 5 (second embodiment) and Fig. 2 (first embodiment) will be listed.

A broadcasting station 10 can use a simple broadcasting contents program 52 and execution program ID 523, as shown in Fig. 3B, in place of the broadcasting contents program 51 and execution program 513 in Fig. 3A.

A reception apparatus 20A in Fig. 5 is constituted by adding an execution program ID loading unit 211 and program retention unit 212 to the reception apparatus 20 in Fig. 2. The program retention unit 212 stores a plurality of pairs of execution program main bodies and their IDs in advance.

In Fig. 5, the simple broadcasting contents program 52 as shown in Fig. 3B is created by a broadcasting program creation unit 101 in the broadcasting station 10, and broadcast via a transmission unit 102. When a reception unit 201 of the reception apparatus 20A receives the simple broadcasting contents program 52, internal information of the program 52 is divided into three. The value of broadcasting contents 511 is stored in a broadcasting contents storage unit 202. The value of contents attributes 512 (e.g., states A and B, 18 years old) is stored in a contents attribute storage unit 203. The value (e.g., 2) of the execution program ID 523 is received by the execution program ID loading unit 211.

If the execution program ID loading unit 211 refers to the program retention unit 212 to find an execution program (program 2) which coincides with the received program ID value (2), the execution program ID loading unit 211 transfers the execution program to an execution program storage unit 204. The subsequent operation is the same as in the first embodiment of Fig. 2.

The broadcasting reception system in Fig. 5 can also receive and process the broadcasting contents program 51 in Fig. 3A.

### (Third Embodiment)

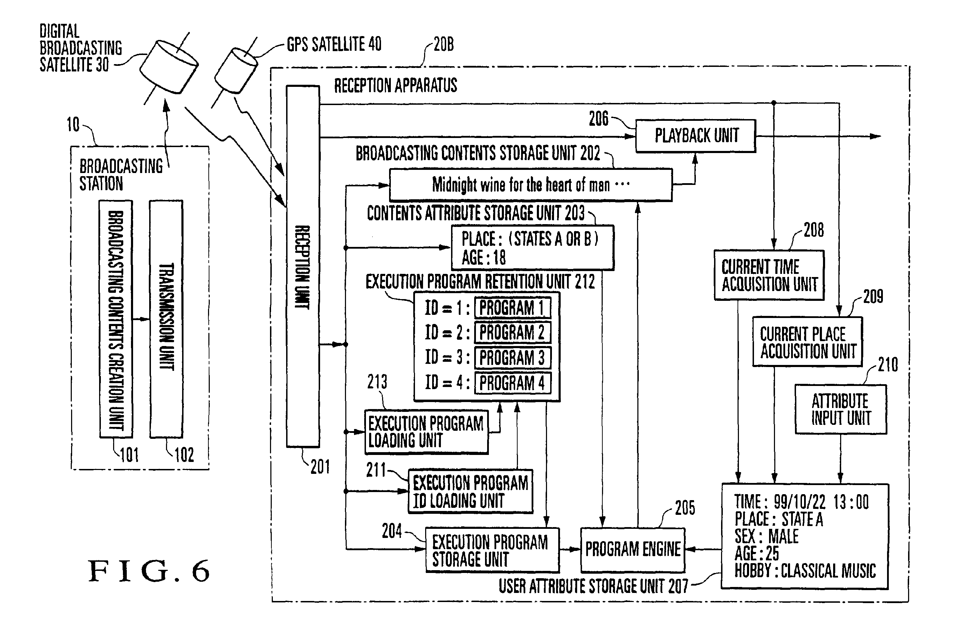

Fig. 6 shows the third embodiment of a broadcasting reception system according to the present invention.

Differences in the arrangement and the like between Fig. 6 (third embodiment) and Fig. 5 (second embodiment) will be listed.

A broadcasting station 10 can use a program transmission broadcasting program 53 shown in Fig. 3C in addition to the broadcasting contents program 52 shown in Fig. 3B. The execution program transmission broadcasting program 53 is comprised of an execution program transmission tag 531, and execution program transmission 532 in which a plurality of pairs of execution programs and their IDs are listed.

A reception apparatus 20B in Fig. 6 is constituted by adding an execution program loading unit 213 to the reception apparatus 20A in Fig. 5.

A broadcasting program creation unit 101 of the broadcasting station 10 creates the execution program transmission broadcasting program 53 as shown in Fig. 3C, and broadcasts the program 53 via a transmission unit 102.

When a reception unit 201 of the reception apparatus 20B receives the execution program transmission broadcasting program 53, the execution program loading unit 213 loads the program 53. If the execution program loading unit 213 checks the value of the execution program transmission tag 531 to find that the tag 531 is an execution program transmission tag, the contents of a program retention unit 212 are cleared, and pairs of IDs (= 1 to 4) and execution programs (1 to 4) stored in the execution program transmission 532 are stored in the program retention unit 212.

The operation after execution program cache memory processing of storing the pairs of the IDs and execution programs of the execution program transmission 532 in the program retention unit 212 is the same as in the second embodiment.

The broadcasting reception system in Fig. 6 can also receive and process the broadcasting contents program 51 in Fig. 3A.

According to the first to third embodiments of the present invention, the broadcasting side can designate, together with transmitted broadcasting contents, a situation in which the broadcasting side wants the recipient to view the broadcasting contents.

Since the broadcasting reception system comprises a mechanism of packaging broadcasting contents with an execution program, broadcasting them, and executing the execution program on the receiving side to determine whether to broadcast the packaged broadcasting contents. Permission/inhibition of broadcasting of broadcasting contents can be dynamically changed in accordance with the situation of the receiving side.

According to the second embodiment of the present invention, typical execution programs are prepared as a kind of cache on the receiving side. The broadcasting station does not transmit the execution program itself as a broadcasting content program, but attaches only the ID of an execution program to be executed to broadcasting contents. The receiving side checks the ID, and selects and executes the execution program to be executed. No execution program need be attached every broadcasting contents, and only the ID of the execution program suffices to be attached. This can realize a small broadcasting capacity and easy management.

According to the third embodiment of the present invention, even if no execution programs are prepared in advance in the reception apparatus by execution program cache processing adopted in the second embodiment, execution programs can be downloaded at once using broadcasting. Accordingly, loading of execution programs on the reception apparatus can be easily realized.

## Claims

1. A programmable selective broadcasting reception system in which broadcasting contents broadcast at once from a broadcasting station (10) to many unspecified people in a wide range are received by a reception apparatus (20), characterized in that
said broadcasting station (10) comprises
means (101, 102) for broadcasting a broadcasting contents program (51) formed from broadcasting contents (511) serving as data of contents to be broadcast, a contents attribute (512) having a pair of an attribute and an attribute value of the broadcasting contents, and an execution program (513) which describes a processing algorithm for determining whether to play back the broadcasting contents (511) in said reception apparatus (20), and
said reception apparatus (20) comprises:
a reception unit (201) for receiving the broadcasting contents program (51); a user attribute storage unit (207) for storing a pair of an attribute and an attribute value of a user; a current time acquisition unit (208) for detecting current time and writing the current time at a time attribute value storage location of said user attribute storage unit (207) at a predetermined time interval; a current place acquisition unit (209) for detecting a current place of the user and writing the current place at a place attribute value storage location of said user attribute storage unit (207) at a predetermined time interval; an attribute input unit (210) for inputting the attribute and the attribute value of said user attribute storage unit (207); an execution program storage unit (204), contents attribute storage unit (203), and broadcasting contents storage unit (202) for respectively reading out and storing contents of the execution program (513), the contents attribute (512), and the broadcasting contents (511) from the broadcasting contents program (51) received by said radio reception unit (201); a playback unit (206) for playing back the broadcasting contents (511); and an execution program engine (205) for referring to the attribute value of said contents attribute storage unit (203) and the attribute value of said user attribute storage unit (207) to interpret and execute the execution program stored in said execution program storage unit (204), and when the broadcasting contents are determined to be broadcast, transmitting the broadcasting contents (511) stored in said broadcasting contents storage unit (202) to said playback unit.

2. A programmable selective broadcasting reception system in which broadcasting contents broadcast at once from a broadcasting station (10) to many unspecified people in a wide range are received by a reception apparatus (20A), characterized in that
said broadcasting station (10) comprises
means (101, 102) for broadcasting a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance, and
said reception apparatus (20A) comprises:
a reception unit (201) for receiving the broadcasting contents program (52); a user attribute storage unit (207) for storing a pair of an attribute and an attribute value of a user; a current time acquisition unit (208) for detecting current time and writing the current time at a time attribute value storage location of said user attribute storage unit (207) at a predetermined time interval; a current place acquisition unit (209) for detecting a current place of the user and writing the current place at a place attribute value storage location of said user attribute storage unit (207) at a predetermined time interval; an attribute input unit (210) for inputting the attribute and the attribute value of said user attribute storage unit; an execution program retention unit (212) for storing a plurality of pairs of IDs corresponding to execution programs each of which describes a processing algorithm for determining whether to play back the broadcasting contents (511); an execution program ID loading unit (211) for reading out a value of the execution program ID (523) from the broadcasting contents program (52) received by said reception unit (201), extracting an execution program having the ID from said execution program retention unit (212), and storing the execution program in said execution program storage unit (204); a contents attribute storage unit (203) and broadcasting contents storage unit (202) for respectively reading out and storing contents of the contents attribute (512) and the broadcasting contents (511) from the received broadcasting contents program (52); a playback unit (206) for playing back the broadcasting contents; and an execution program engine (205) for referring to the attribute value of said contents attribute storage unit (203) and the attribute value of said user attribute storage unit (207) to interpret and execute the execution program stored in said execution program storage unit (204), and when the broadcasting contents are determined to be broadcast, transmitting the broadcasting contents (511) stored in said broadcasting contents storage unit (202) to said playback unit (206).

3. A system according to claim 2, wherein
said broadcasting station (10) comprises means (101, 102) for transmitting pairs of a plurality of execution programs stored in said execution program retention unit (212) and IDs corresponding to the respective execution programs, as an execution program transmission broadcasting program (53) formed from an execution program transmission tag (531) which stores a tag representing transmission of an execution program from said broadcasting station, and execution program transmission (532) subsequent to the tag (531) that includes a plurality of pairs of execution program IDs and execution programs, and
said reception apparatus (20A) has an execution program loading unit (213) for, when said reception unit (201) receives the execution program transmission broadcasting program (53), extracting a value of the execution program transmission (532) subsequent to the tag (531) representing transmission of the execution program, and storing a pair of the extracted execution program and an ID in said program retention unit (212).

4. A programmable selective broadcasting apparatus for broadcasting at once broadcasting contents to many unspecified people in a wide range,
characterized in that
said broadcasting apparatus (10) comprises means for broadcasting a broadcasting contents program (51) formed from broadcasting contents (511) serving as data of contents to be broadcast, a contents attribute (512) having a pair of an attribute and an attribute value of the broadcasting contents, and an execution program (513) which describes a processing algorithm for determining whether to play back the broadcasting contents on a receiving side.

5. A reception apparatus for receiving programmable selective broadcasting, characterized by comprising:
a reception unit (201) for receiving a broadcasting contents program (51) formed from broadcasting contents (511) serving as data of contents to be broadcast, a contents attribute (512) having a pair of an attribute and an attribute value of the broadcasting contents, and an execution program (513) which describes a processing algorithm for determining whether to play back the broadcasting contents on a receiving side;
a user attribute storage unit (207) for storing a pair of an attribute and an attribute value of a user;
a current time acquisition unit (208) for detecting current time and writing the current time at a time attribute value storage location of said user attribute storage unit at a predetermined time interval;
a current place acquisition unit (209) for detecting a current place of the user and writing the current place at a place attribute value storage location of said user attribute storage unit at a predetermined time interval;
an attribute input unit (210) for inputting the attribute and the attribute value of said user attribute storage unit (207);
an execution program storage unit (204), contents attribute storage unit (203), and broadcasting contents storage unit (202) for respectively reading out and storing contents of the execution program (513), the contents attribute (512), and the broadcasting contents (511) from the received broadcasting contents program;
a playback unit (206) for playing back the broadcasting contents (511); and
an execution program engine (205) for referring to the attribute value of said contents attribute storage unit (203) and the attribute value of said user attribute storage unit (207) to interpret and execute the execution program stored in said execution program storage unit (204), and when the broadcasting contents (511) are determined to be broadcast, transmitting the broadcasting contents stored in said broadcasting contents storage unit (202) to said playback unit (206).

6. A digital broadcasting programmable selective broadcasting apparatus for broadcasting at once broadcasting contents to many unspecified people in a wide range, characterized in that
said broadcasting apparatus (10) comprises means (101, 102) for broadcasting a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance.

7. A programmable selective broadcasting reception apparatus characterized by comprising:
a reception unit (201) for receiving a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance;
a user attribute storage unit (207) for storing a pair of an attribute and an attribute value of a user;
a current time acquisition unit (208) for detecting current time and writing the current time at a time attribute value storage location of said user attribute storage unit at a predetermined time interval;
a current place acquisition unit (209) for detecting a current place of the user and writing the current place at a place attribute value storage location of said user attribute storage unit (207) at a predetermined time interval;
an attribute input unit (210) for inputting the attribute and the attribute value of said user attribute storage unit (207);
an execution program retention unit (212) for storing a plurality of pairs of IDs corresponding to execution programs each of which describes a processing algorithm for determining whether to play back the broadcasting contents (511);
an execution program ID loading unit (211) for reading out a value of the execution program ID (523) from the received broadcasting contents program (52), extracting an execution program having the readout ID from said execution program retention unit (212), and storing the execution program in said execution program storage unit (204);
a contents attribute storage unit (203) and a broadcasting contents storage unit (202) for respectively reading out and storing contents of the contents attribute (512) and the broadcasting contents (511) from the received broadcasting contents program (52);
a playback unit (206) for playing back the broadcasting contents (511); and
an execution program engine (205) for referring to the attribute value of said contents attribute storage unit (203) and the attribute value of said user attribute storage unit (207) to interpret and execute the execution program stored in said execution program storage unit (204), and when the broadcasting contents (511) are determined to be broadcast, transmitting the broadcasting contents (511) stored in said broadcasting contents storage unit (202) to said playback unit (206).

8. An apparatus according to claim 6, wherein
said broadcasting station (10) comprises means (101, 102) for transmitting an execution program transmission broadcasting program (53) formed from an execution program transmission tag (531) which stores a tag representing transmission of the execution program, and execution program transmission (532) subsequent to the tag (531) that includes a plurality of pairs of execution program IDs and execution programs.

9. A programmable selective broadcasting reception apparatus characterized by comprising:
a reception unit (201) for receiving a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance, and receiving an execution program transmission broadcasting program (53) formed from an execution program transmission tag (531) which stores a tag representing transmission of a broadcast execution program, and execution program transmission (532) subsequent to the tag (531) that includes a plurality of pairs of execution program IDs and execution programs;
a user attribute storage unit (207) for storing a pair of an attribute and an attribute value of a user;
a current time acquisition unit (208) for detecting current time and writing the current time at a time attribute value storage location of said user attribute storage unit (207) at a predetermined time interval;
a current place acquisition unit (209) for detecting a current place of the user and writing the current place at a place attribute value storage location of said user attribute storage unit (207) at a predetermined time interval;
an attribute input unit (210) for inputting the attribute and the attribute value of said user attribute storage unit (207);
an execution program retention unit (212) for storing a plurality of pairs of IDs corresponding to execution programs each of which describes a processing algorithm for determining whether to play back the broadcasting contents (511);
an execution program loading unit (213) for, when said reception unit (201) receives the execution program transmission broadcasting program (53), extracting a value of the execution program transmission (532) subsequent to the tag (531) representing transmission of the execution program, and storing a pair of the extracted execution program and an ID in said program retention unit (212);
an execution program ID loading unit (211) for reading out a value of the execution program ID (523) from the broadcasting contents program (52) received by said reception unit (201), extracting an execution program having the readout ID from said execution program retention unit (212), and storing the execution program in said execution program storage unit (204);
a contents attribute storage unit (203) and a broadcasting contents storage unit (202) for respectively reading out and storing contents of the contents attribute (512) and the broadcasting contents (511) from the received broadcasting contents program (52);
a playback unit (206) for playing back the broadcasting contents (511); and
an execution program engine (205) for referring to the attribute value of said contents attribute storage unit (203) and the attribute value of said user attribute storage unit (207) to interpret and execute the execution program stored in said execution program storage unit (204), and when the broadcasting contents are determined to be broadcast, transmitting the broadcasting contents (511) stored in said broadcasting contents storage unit (202) to said playback unit (206).

10. A programmable selective broadcasting reception system in which broadcasting contents broadcast at once from a broadcasting station (10) are received by a reception apparatus (20), characterized in that
said broadcasting station (10) comprises
means (101, 102) for broadcasting a broadcasting contents program (51) formed from broadcasting contents (511) serving as data of contents to be broadcast, a contents attribute (512) having a pair of an attribute and an attribute value of the broadcasting contents, and an execution program (513) which describes a processing algorithm for determining whether to play back the broadcasting contents (511) in said reception apparatus (20), and
said reception apparatus (20) comprises:
a reception unit (201) for receiving the broadcasting contents program (51); a user attribute storage unit (207) for storing a pair of an attribute and an attribute value of a user; an execution program storage unit (204), contents attribute storage unit (203), and broadcasting contents storage unit (202) for respectively reading out and storing contents of the execution program (513), the contents attribute (512), and the broadcasting contents (511) from the broadcasting contents program (51) received by said radio reception unit (201); a playback unit (206) for playing back the broadcasting contents (511); and an execution program engine (205) for referring to the attribute value of said contents attribute storage unit (203) and the attribute value of said user attribute storage unit (207) to interpret and execute the execution program stored in said execution program storage unit (204), and when the broadcasting contents are determined to be broadcast, transmitting the broadcasting contents (511) stored in said broadcasting contents storage unit (202) to said playback unit.

11. A programmable selective broadcasting reception system in which broadcasting contents broadcast at once from a broadcasting station (10) are received by a reception apparatus (20A), characterized in that
said broadcasting station (10) comprises
means (101, 102) for broadcasting a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance, and
said reception apparatus (20A) comprises:
a reception unit (201) for receiving the broadcasting contents program (52); an execution program retention unit (212) for storing a plurality of pairs of IDs corresponding to execution programs each of which describes a processing algorithm for determining whether to play back the broadcasting contents (511); an execution program ID loading unit (211) for reading out a value of the execution program ID (523) from the broadcasting contents program (52) received by said reception unit (201), extracting an execution program having the ID from said execution program retention unit (212), and storing the execution program in said execution program storage unit (204); a contents attribute storage unit (203) and broadcasting contents storage unit (202) for respectively reading out and storing contents of the contents attribute (512) and the broadcasting contents (511) from the received broadcasting contents program (52); a playback unit (206) for playing back the broadcasting contents; and an execution program engine (205) for referring to the attribute value of said contents attribute storage unit (203) and the attribute value of said user attribute storage unit (207) to interpret and execute the execution program stored in said execution program storage unit (204), and when the broadcasting contents are determined to be broadcast, transmitting the broadcasting contents (511) stored in said broadcasting contents storage unit (202) to said playback unit (206).

12. A system according to claim 11, wherein
said broadcasting station (10) comprises means (101, 102) for transmitting pairs of a plurality of execution programs stored in said execution program retention unit (212) and IDs corresponding to the respective execution programs, as an execution program transmission broadcasting program (53) formed from an execution program transmission tag (531) which stores a tag representing transmission of an execution program from said broadcasting station, and execution program transmission (532) subsequent to the tag (531) that includes a plurality of pairs of execution program IDs and execution programs, and
said reception apparatus (20A) has an execution program loading unit (213) for, when said reception unit (201) receives the execution program transmission broadcasting program (53), extracting a value of the execution program transmission (532) subsequent to the tag (531) representing transmission of the execution program, and storing a pair of the extracted execution program and an ID in said program retention unit (212).

13. A programmable selective broadcasting apparatus for broadcasting at once broadcasting contents, characterized in that
said broadcasting apparatus (10) comprises means for broadcasting a broadcasting contents program (51) formed from broadcasting contents (511) serving as data of contents to be broadcast, a contents attribute (512) having a pair of an attribute and an attribute value of the broadcasting contents, and an execution program (513) which describes a processing algorithm for determining whether to play back the broadcasting contents on a receiving side.

14. A reception apparatus for receiving programmable selective broadcasting, characterized by comprising:
a reception unit (201) for receiving a broadcasting contents program (51) formed from broadcasting contents (511) serving as data of contents to be broadcast, a contents attribute (512) having a pair of an attribute and an attribute value of the broadcasting contents, and an execution program (513) which describes a processing algorithm for determining whether to play back the broadcasting contents on a receiving side;
a user attribute storage unit (207) for storing a pair of an attribute and an attribute value of a user;
an execution program storage unit (204), contents attribute storage unit (203), and broadcasting contents storage unit (202) for respectively reading out and storing contents of the execution program (513), the contents attribute (512), and the broadcasting contents (511) from the received broadcasting contents program;
a playback unit (206) for playing back the broadcasting contents (511); and
an execution program engine (205) for referring to the attribute value of said contents attribute storage unit (203) and the attribute value of said user attribute storage unit (207) to interpret and execute the execution program stored in said execution program storage unit (204), and when the broadcasting contents (511) are determined to be broadcast, transmitting the broadcasting contents stored in said broadcasting contents storage unit (202) to said playback unit (206).

15. A digital broadcasting programmable selective broadcasting apparatus for broadcasting at once broadcasting contents, characterized in that
said broadcasting apparatus (10) comprises means (101, 102) for broadcasting a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance.

16. A programmable selective broadcasting reception apparatus characterized by comprising:
a reception unit (201) for receiving a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance;
a user attribute storage unit (207) for storing a pair of an attribute and an attribute value of a user;
an execution program retention unit (212) for storing a plurality of pairs of IDs corresponding to execution programs each of which describes a processing algorithm for determining whether to play back the broadcasting contents (511);
an execution program ID loading unit (211) for reading out a value of the execution program ID (523) from the received broadcasting contents program (52), extracting an execution program having the readout ID from said execution program retention unit (212), and storing the execution program in said execution program storage unit (204);
a contents attribute storage unit (203) and a broadcasting contents storage unit (202) for respectively reading out and storing contents of the contents attribute (512) and the broadcasting contents (511) from the received broadcasting contents program (52);
a playback unit (206) for playing back the broadcasting contents (511); and
an execution program engine (205) for referring to the attribute value of said contents attribute storage unit (203) and the attribute value of said user attribute storage unit (207) to interpret and execute the execution program stored in said execution program storage unit (204), and when the broadcasting contents (511) are determined to be broadcast, transmitting the broadcasting contents (511) stored in said broadcasting contents storage unit (202) to said playback unit (206).

17. An apparatus according to claim 15, wherein
said broadcasting station (10) comprises means (101, 102) for transmitting an execution program transmission broadcasting program (53) formed from an execution program transmission tag (531) which stores a tag representing transmission of the execution program, and execution program transmission (532) subsequent to the tag (531) that includes a plurality of pairs of execution program IDs and execution programs.

18. A programmable selective broadcasting reception apparatus characterized by comprising:
a reception unit (201) for receiving a broadcasting contents program (52) formed from broadcasting contents (511) serving as data of contents to be broadcast, a contents attribute (512) having a pair of an attribute and an attribute value of the broadcasting contents, and an execution program ID (523) which stores an execution program ID set in advance, and receiving an execution program transmission broadcasting program (53) formed from an execution program transmission tag (531) which stores a tag representing transmission of a broadcast execution program, and execution program transmission (532) subsequent to the tag (531) that includes a plurality of pairs of execution program IDs and execution programs;
a user attribute storage unit (207) for storing a pair of an attribute and an attribute value of a user;
an execution program retention unit (212) for storing a plurality of pairs of IDs corresponding to execution programs each of which describes a processing algorithm for determining whether to play back the broadcasting contents (511);
an execution program loading unit (213) for, when said reception unit (201) receives the execution program transmission broadcasting program (53), extracting a value of the execution program transmission (532) subsequent to the tag (531) representing transmission of the execution program, and storing a pair of the extracted execution program and an ID in said program retention unit (212);
an execution program ID loading unit (211) for reading out a value of the execution program ID (523) from the broadcasting contents program (52) received by said reception unit (201), extracting an execution program having the readout ID from said execution program retention unit (212), and storing the execution program in said execution program storage unit (204);
a contents attribute storage unit (203) and a broadcasting contents storage unit (202) for respectively reading out and storing contents of the contents attribute (512) and the broadcasting contents (511) from the received broadcasting contents program (52);
a playback unit (206) for playing back the broadcasting contents (511); and
an execution program engine (205) for referring to the attribute value of said contents attribute storage unit (203) and the attribute value of said user attribute storage unit (207) to interpret and execute the execution program stored in said execution program storage unit (204), and when the broadcasting contents are determined to be broadcast, transmitting the broadcasting contents (511) stored in said broadcasting contents storage unit (202) to said playback unit (206).
